# FASCICULE DE BREVET EUROPEEN

(11) **EP 2 586 118 B1**
(45) Date de publication et mention de la délivrance du brevet: **02.06.2021**
(21) Numéro de dépôt: 11724666.0
(22) Date de dépôt: 14.06.2011
(51) Int. Cl.: H02K 5/24, B60H 1/00

(54) **DISPOSITIF DE RECEPTION D'UN MOTEUR DE PULSEUR D'UNE INSTALLATION DE VENTILATION D'UN VEHICULE**
VORRICHTUNG ZUR AUFNAHME EINES IMPULSGEBERMOTORS EINES BELÜFTUNGSSYSTEMS EINES KRAFTFAHRZEUGS
DEVICE FOR RECEIVING A PULSER MOTOR OF A VENTILATION INSTALLATION OF A VEHICLE

(30) Priorité: 24.06.2010 FR 1002651
(43) Date de publication de la demande: 01.05.2013
(73) Titulaire: Valeo Systèmes Thermiques, 78320 Le Mesnil-Saint-Denis (FR)
(72) Inventeur: TRUILLET, Franck, F-28410 Bu (FR); DROULEZ, Eric, F-92150 Suresnes (FR); COZIC, Ronan, F-28110 Luce (FR)
(86) Numéro de dépôt international: PCT/EP2011/059862
(87) Numéro de publication internationale: WO 2011/160983

(56) Documents cités:
- EP-A1- 0 642 206
- US-A1- 2003 080 635
- US-A1- 2009 285 672

## Description

Le secteur technique de la présente invention est celui des dispositifs de support de moteur pour système de ventilation, chauffage et/ou climatisation pour véhicule automobile. Plus particulièrement, l'invention porte sur un dispositif de réception d'un moteur actionnant une roue de pulseur de l'installation précité.

Dans un système de ventilation, chauffage et/ou climatisation, le flux d'air y circulant est propulsé par une roue de pulseur mise en rotation par un moteur. Les caractéristiques dimensionnelles de ces composants varient en fonction du volume de l'habitacle des véhicules concernés. Par exemple, le volume de l'habitacle d'un véhicule de type citadin est nettement inférieur au volume de l'habitacle d'un véhicule de type familial comme par exemple un monospace ou un véhicule tout terrain. C'est également le cas pour une installation de ventilation, chauffage et/ou climatisation identique à une même plateforme de véhicules, ladite plateforme étant déclinée selon différent type d'habitacle (monocorps, bi-corps, tri-corps).

Les caractéristiques du moteur électrique qui met en mouvement la roue de pulseur sont donc directement liées à ce volume et au débit d'air qu'il faut fournir pour renouveler ce volume d'air. On comprend donc qu'un véhicule de type citadin se contente d'un moteur électrique de faible puissance/faible encombrement pour actionner la roue de pulseur alors que le véhicule de type familial requiert l'emploi d'un moteur électrique de forte puissance/encombrement important pour mettre en mouvement la roue de pulseur.

De plus, la taille des moteurs électriques est variable d'un fournisseur de moteur à l'autre même à puissance constante.

Ces variations dimensionnelles des moteurs impliquent alors une variation dimensionnelle des composants qui réceptionnent et maintiennent ces moteurs. Autrement dit, le support-moteur d'un moteur de faible puissance/faible encombrement est aujourd'hui différent, en particulier plus petit, qu'un support-moteur d'un moteur électrique de forte puissance/encombrement important.

Cette situation implique un certain nombre d'inconvénients majeurs.

Un des principaux inconvénients est qu'il est nécessaire de concevoir et développer un support-moteur pour chaque type ou taille de moteur électrique alors même que le reste de l'installation est identique. Plus particulièrement, il est nécessaire de concevoir et développer une bague du support moteur spécifique à chaque type ou taille de moteur électrique.

Un autre inconvénient de l'état de la technique cité ci-dessus réside dans le fait que la multiplicité de support-moteur génère une complication logistique au sein d'une même usine qui fabrique des installations de ventilation, chauffage et/ou climatisation. Cette contrainte est en regard des pièces en tant que telles mais aussi en regard de l'outillage différent qu'il est nécessaire de stocker et gérer.

Au final, ces inconvénients augmentent les coûts de développement et de fabrication des installations en question.

Le but de la présente invention est donc de résoudre les inconvénients décrits ci-dessus principalement en standardisant certaines pièces constitutives du groupe moto-ventilateur et plus particulièrement du support-moteur et en reportant la spécificité des moteurs électriques sur une pièce constitutive du groupe moto-ventilateur, plus petite et de fabrication simple. Il est alors plus facile de gérer les contraintes logistiques sur une seule et unique petite pièce que sur un ensemble de composants tous adaptés à la spécificité d'un moteur particulier.

L'invention a donc pour objet un dispositif de réception d'un moteur électrique selon la revendication 1.

Les modes de réalisation préférés sont définis dans les revendications dépendantes.

Un tout premier avantage selon l'invention réside dans le fait qu'il n'est plus nécessaire de concevoir et développer un support moteur spécifiquement appareillé à une taille ou à un type de moteur électrique. Il est aussi possible d'utiliser des moteurs issus de plusieurs fabricants différents sans pour autant concevoir un nouveau support moteur.

Un autre avantage réside dans la simplicité de gestion logistique au sein d'une usine d'assemblage d'installations de ventilation, chauffage et/ou climatisation. En effet, il n'existe alors plus qu'une seule référence de pièce et d'outillage à gérer et la spécificité du moteur électrique est reportée sur une seule et unique pièce de taille réduite.

D'autres caractéristiques, détails et avantages de l'invention ressortiront plus clairement à la lecture de la description donnée ci-après à titre indicatif en relation avec des dessins dans lesquels :
- la figure 1 est un éclaté d'un groupe moto-ventilateur mettant en oeuvre un mode de réalisation de l'invention,
- la figure 2 est une vue en perspective de côté de ce groupe moto-ventilateur sans la roue de pulseur,
- la figure 3 est une vue partielle d'un mode de réalisation de l'invention,

- la figure 4 est une vue en perspective du groupe moto-ventilateur équipée de l'invention,
- la figure 5 est une vue schématique d'une première variante du groupe moto-ventilateur selon l'invention,
- la figure 6 est une vue schématique d'une deuxième variante du groupe moto-ventilateur,
- la figure 7 est une vue schématique d'une variante combinant le mode de réalisation des figures 5 et 6,
- la figure 8 est une vue en perspective d'une variante de l'invention,
- la figure 9 est une vue en perspective de l'assemblage du moteur dans la variante de la figure 8,
- la figure 10 est une vue en perspective du moteur assemblé dans la variante de la figure 8,
- la figure 11 est une vue en perspective d'un mode de réalisation selon l'invention,
- la figure 12 est une vue de détail du mode de réalisation de la figure 11,
- les figures 13 à 15 sont des vues illustrant un moyen de blocage de l'anneau sur la bague.

Il faut noter que les figures exposent l'invention de manière détaillée, lesdites figures peuvent bien entendu servir à mieux définir l'invention le cas échéant.

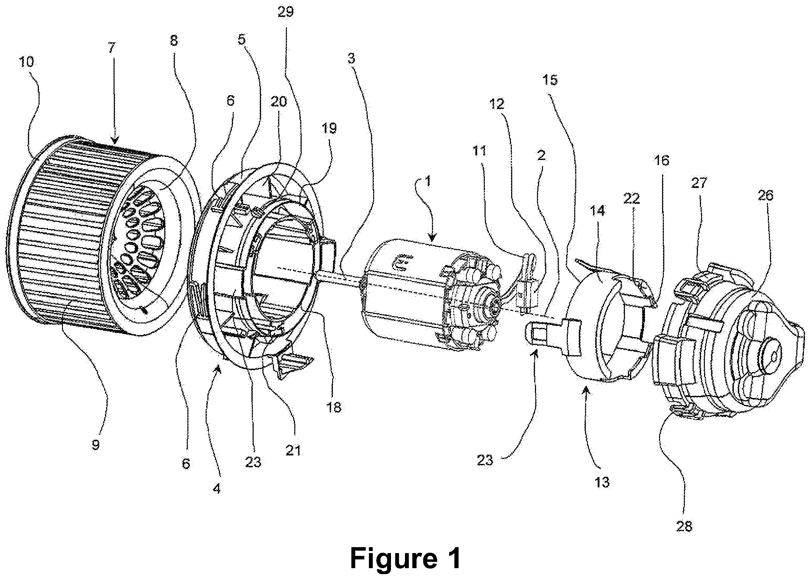

La figure 1 montre l'invention dans un exemple de réalisation où un dispositif de réception d'un moteur électrique 1 est mis en œuvre dans un groupe moto-ventilateur d'une installation de ventilation, chauffage et/ou climatisation équipant un véhicule automobile. Le moteur 1 s'étend selon un axe longitudinal 2 qui passe au centre de ce dernier, cet axe étant l'axe principal du moteur dans lequel un arbre 3 s'étend. Cet arbre 3 est supporté par le moteur à chacune de ses extrémités, par exemple par des roulements.

A gauche du moteur 1 est visible un support moteur 4 en matière plastique, par exemple du polypropylène, de forme circulaire qui présente un évidement central pour recevoir le moteur 1. Cet évidement central est délimité par une bague 18.

Une paroi périphérique externe 5 entoure la bague 18 et comprend des moyens de solidarisation 6 qui servent à fixer le support moteur 4 sur un boîtier constitutif de l'installation de ventilation, chauffage et/ou climatisation.

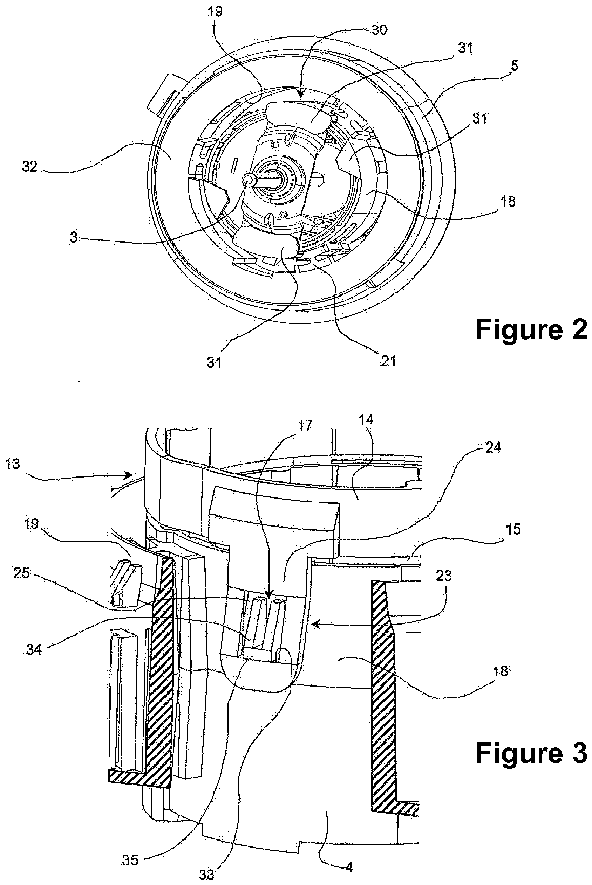

Entre la paroi externe 5 et la bague 18 est installée une paroi intermédiaire 19 reliée à la paroi externe 5 par des moyens d'espacement 20 et par un flanc 32 (visible sur la figure 2), ces moyens d'espacement prenant la forme par exemple de bras qui s'étendent radialement par rapport à l'axe 2 et reliés d'un côté à la paroi externe 5 et de l'autre à la paroi intermédiaire 19.

La paroi intermédiaire 19 est par ailleurs reliée à la bague 18 par un au moins un moyen de découplage 21. Ce dernier est fabriqué dans un matériau plus souple que le matériau utilisé pour le support moteur 4 de sorte à assurer une fonction d'isolation pour empêcher la transmission des vibrations générées par le moteur 1 entre la bague 18 et la paroi intermédiaire 19.

La paroi externe 5, la paroi intermédiaire 19 et la bague 18 prennent la forme de tubes cylindriques creux installés de manière globalement concentrique les uns par rapport aux autres.

Le bague 18 comprend au moins un premier moyen de blocage qui est visible sur la figure 2. De manière générale, ce premier moyen de blocage débouche de la bague 18 en direction de l'arbre 3 du moteur 1. Le premier moyen de blocage participe du maintien et de la solidarisation du moteur 1 dans le dispositif de réception selon l'invention.

Le premier moyen de blocage est destiné à limiter le mouvement du moteur selon l'axe longitudinal. Le moteur électrique vient donc en appui par une de ses extrémités contre le premier moyen de blocage.

Dans le prolongement du support moteur 4 et à gauche de ce dernier est montrée une roue de pulseur 7 en matière plastique qui prend la forme d'un bol 8, par exemple partiellement ajouré, à la périphérie duquel s'étend une multiplicité de pales 9. Cette multiplicité de pales 9 est reliée d'un côté au bol 8 et de l'autre à un bord circulaire 10 qui rejoint chacune des pales 9. On notera que ces pales 9 s'étendent selon une direction parallèle à la direction de l'axe longitudinal 2.

Cette roue de pulseur 7 prend donc la forme d'une hélice radiale mais il pourrait aussi s'agir d'une hélice plate où les pales s'étendent sensiblement perpendiculairement par rapport à la direction de l'axe longitudinale 2.

La roue de pulseur 7 est solidarisée sur l'arbre 3 par un moyeu disposé au centre du bol 8, moyeu au travers duquel passe l'arbre 3.

A droite du moteur 1 sur la figure 1, on peut voir un faisceau électrique 11 à l'extrémité duquel est installé un connecteur qui permet de raccorder électriquement le moteur à un dispositif de commande du groupe moto-ventilateur.

Encore à droite du moteur 1 est visible un anneau 13 qui participe à la réception et à la solidarisation du moteur 1 dans le support moteur 4. Cet anneau 13 est en matière plastique, par exemple du polypropylène, et prend une forme circulaire creuse.

L'anneau 13 est constitué d'un corps 14, par exemple circulaire, présentant une première extrémité ouverte 15 tournée vers la bague 18 et une seconde extrémité ouverte 16 opposée à la première extrémité 15 par rapport au corps 14.

L'anneau 13 et la bague 18 sont deux pièces distincts et séparées, c'est-à-dire fabriquées indépendamment l'une par rapport à l'autre, et assemblées l'une avec l'autre à l'aide du moyen de fixation 23.

Au moins un second moyen de blocage 22 est formé sur le corps 14 de l'anneau 13 au niveau de la seconde extrémité 16. Ce second moyen de blocage s'étend angulairement, autrement dit radialement par rapport à l'axe 2 vers l'arbre 3 du moteur 1 et forme ainsi une butée qui limite ou bloque le déplacement du moteur 1, ce dernier venant en appui contre le second moyen de blocage 22 par appui de son extrémité contre la butée formant le second moyen de blocage 22.

A titre d'exemple de réalisation, le second moyen de blocage 22 forme un bandeau circulaire continu sur le corps 14. A titre d'alternative et comme représenté sur la figure 1, le second moyen de blocage 22 est formé de manière discontinue. Autrement dit, le second moyen de blocage 22 est formé d'au moins une languette radiale issue du corps 14 au droit de la seconde extrémité 16, la seconde extrémité étant dépourvue de cette languette sur au moins un secteur angulaire.

Le premier moyen de blocage fait face au second moyen de blocage 22, ainsi le moteur électrique 1 est intercalé entre ces deux moyens de blocage. Le premier moyen de blocage retient le moteur électrique 1 dans un premier sens selon l'axe longitudinal 2 alors que le second moyen de blocage 22 bloque le déplacement ou le mouvement du moteur dans une même direction, c'est-à-dire selon l'axe longitudinal 2, mais dans un sens opposé au sens de retenu du moteur 1 opéré par le premier moyen de blocage.

Le dispositif de réception selon l'invention comprend au moins un moyen de fixation 23 dont le but est de relier l'anneau 13 à la bague 18. Autrement dit, ce moyen de fixation 23 a pour fonction de solidariser mécaniquement ces deux pièces de sorte à définir un volume qui enferme le moteur 1.

Préférentiellement, le moyen de fixation 23 est amovible en ce sens que la liaison mécanique entre la bague 18 et l'anneau 13 est démontable sans destruction de l'une ou l'autre de ces pièces.

A l'extrémité droite de la figure 1 est montrée un capot 26 qui prend la forme de cuvette creuse et dont la fonction est de fermer la partie arrière du groupe moto-ventilateur. Ce capot 26 est distinct, c'est-à-dire séparé de la bague et de l'anneau, et rapporté sur ledit support moteur après assemblage et solidarisation de l'anneau 13 sur la bague 18.

Ce capot 26 comprend une paroi périphérique 27 qui borde une extrémité ouverte de ce capot de laquelle débouche au moins un clips de fixation 28 qui se présente sous la forme d'une patte en forme de « U » attachée à chaque extrémité des branches du « U » à la paroi périphérique 27.

Ces clips de fixation 28 coopèrent avec des ergots 29 issues de moulage avec le support moteur 4. Plus précisément, ces ergots 29 sont formés sur la paroi intermédiaire 19 du support moteur 4. A titre d'exemple, ces ergots sont formés sur la face 29 de la paroi intermédiaire 19 qui est tournée vers la paroi externe 5 du support moteur 4.

La figure 2 montre plus particulièrement le premier moyen de blocage 30. Ce dernier est formé sur la bague 18 du support moteur 4 au niveau d'une première extrémité de la bague 18, cette extrémité étant celle la plus proche de la roue de pulseur. Ce premier moyen de blocage 30 s'étend radialement par rapport à l'axe 2 vers l'arbre 3 du moteur 1 et forme ainsi une butée qui limite ou bloque le déplacement du moteur 1. On comprend donc que le premier moyen de blocage 30 chevauche le bout du moteur 1 côté roue de pulseur.

A titre d'exemple de réalisation, le premier moyen de blocage 30 forme un bandeau circulaire continu au droit de la première extrémité de la bague 18. A titre d'alternative et comme représenté sur la figure 2, le premier moyen de blocage 30 est formé de manière discontinue. Autrement dit, le premier moyen de blocage 30 est formé d'au moins une languette radiale 31 venue de moulage avec la bague 18, la première extrémité de la bague 18 étant dépourvue de cette languette sur au moins un secteur angulaire. Sur cet exemple de réalisation, les languettes sont au nombre de quatre.

La figure 2 montre aussi un flanc 32 qui s'étend dans un plan orthogonal par rapport à l'axe longitudinal 2 et qui joint la paroi externe 5 avec la paroi intermédiaire 19. A la bordure de ce flanc 32 et entre la paroi intermédiaire 19 et la bague 18, on peut voir un exemple de réalisation du moyen de découplage 21 qui prend ici la forme de trois plots de maintien répartis sur la circonférence de la bague 18. Le matériau du moyen de découplage 21 est du caoutchouc naturel, du polypropylène, de l'EPDM ou du SEBS.

La figure 3 montre de manière détaillée le moyen de fixation 23. Pour des besoins de représentation, la paroi intermédiaire 19 est représentée de manière découpée (hachures) de sorte à rendre apparent le moyen de fixation 23.

Le moyen de fixation 23 comprend une excroissance 24 qui s'étend du corps 14 selon une direction parallèle à l'axe longitudinal 2 et dépasse la première extrémité 15 en direction de la bague 18. A titre d'exemple, il s'agit d'au moins trois bras qui débouchent à la périphérie du corps 14.

Le moyen de fixation 23 comprend également une dent 17 formée sur la bague 18. A titre d'exemple, la dent 17 débouche d'une face constitutive de la bague 18 tournée vers la paroi intermédiaire 19.

La dent 17 s'étend radialement par rapport à l'axe de la bague 18 et vers l'extérieur de cette dernière. Cette dent prend la forme d'une dent de retenue de l'excroissance 24 pratiquée sur l'anneau 13. Cette dent 17 présente une rampe 34 inclinée et terminée par un bord d'attaque 35 disposé perpendiculairement à l'axe longitudinal 2.

Cette excroissance 24 comprend un compartiment de réception 25 de la dent 17 issue de la bague 18. Ce compartiment 25 prend la forme d'un trou traversant pratiqué à une extrémité libre de l'excroissance 24 mais il peut s'agir aussi d'un logement non débouchant à l'intérieur duquel la dent 17 vient s'accrocher.

La solidarisation de l'anneau 13 avec la bague 18 intervient quand un bord 33 du compartiment de réception 25 vient en appui contre le bord d'attaque 35. On notera que l'excroissance 24 présente une épaisseur définie de sorte à la rendre flexible et ainsi se déformer quand l'anneau 13 est en phase d'assemblage sur la bague 18.

Ce moyen de fixation 23 participe du maintien et de la solidarisation du moteur électrique 1 en coopération avec le premier moyen de blocage 30 formé sur la bague 18 et le second moyen de blocage 22 formé sur l'anneau 13.

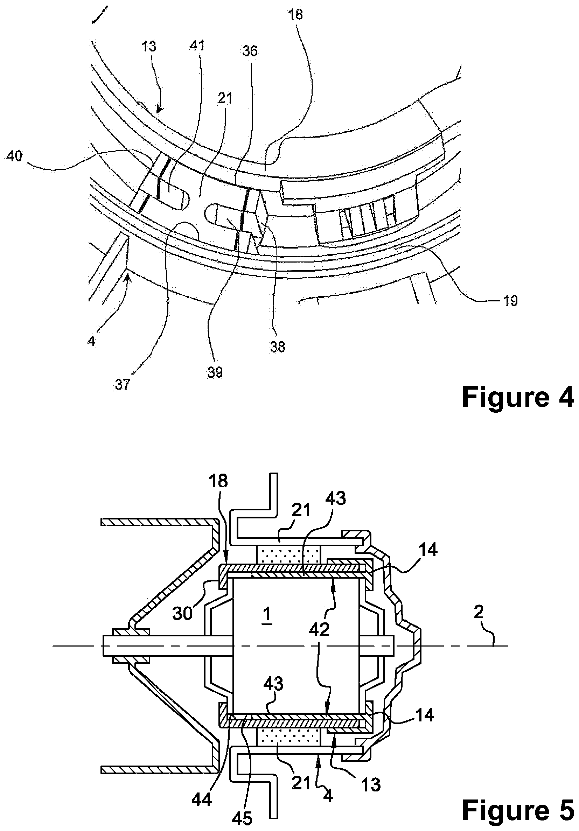

Le moyen de découplage 21 de l'invention est montré à titre d'exemple sur la figure 4. Ce moyen de découplage est un plot parallélépipédique comprenant un premier côté 36 en contact direct avec la bague 18 du support moteur 4.

Le moyen de découplage comprend un deuxième côté 37 en contact direct avec la paroi intermédiaire 19 du support moteur 4 et un troisième côté 38 libre s'étendant parallèlement à l'axe longitudinal 2 du moteur 1. Le troisième côté 38 présente au moins un évidement 39 s'étendant selon une direction parallèle à l'axe longitudinal 2.

Le moyen de découplage 21 comprend un quatrième côté 40 présentant lui aussi au moins un évidement 41. La structure spécifique du moyen de découplage assure le découplage entre le moteur 1 et le support moteur 4 quelque soit le type de vibrations provoquées par la mise en œuvre du moteur et de la roue de pulseur. Ainsi, les vibrations de type axial et de type tangentiel sont absorbées par le moyen de découplage 21. L'évidement 40 et/ou 41 créé selon une direction parallèle à l'axe longitudinale 2 confère une souplesse du plot par rapport à une contrainte axiale et à une contrainte tangentielle tout en conservant une rigidité du plot par rapport à une contrainte radiale.

De manière avantageuse, le moyen de découplage 21 est conformé en H.

La bague 18, le moyen de découplage 21, la paroi intermédiaire 19 et la paroi externe 5 forment une seule pièce, fabriquée d'un seul tenant en utilisant un procédé de surmoulage pour former le moyen de découplage 21.

Alternativement, le moyen de découplage 21 est surmoulé sur la bague 18 est rapporté mécaniquement sur la paroi intermédiaire 19, par exemple par une coopération du moyen de découplage avec un logement de réception pratiqué sur la paroi intermédiaire 19. Dans une telle situation, la bague 18 et le moyen de découplage sont fabriqués selon une même opération de moulage-surmoulage et le support moteur 4 (paroi intermédiaire 19 et paroi externe 5) forme une seule et unique pièce.

De manière alternative encore, le moyen de découplage 21 est surmoulé sur la paroi intermédiaire 19 pour rapporter mécaniquement sur la bague 18. Ainsi, le support moteur 4 et le moyen de découplage 21 sont fabriqués d'un seul tenant par un procédé de surmoulage et la bague 18 est rapportée par coopération entre le moyen de découplage et des logements de réception de ce moyen de découplage fabriqués sur la bague 18.

Des exemples de réalisation d'un moyen intercalaire 42 selon l'invention sont représentés sur les figures 5 à 7.

De manière générale, le moyen intercalaire a pour fonction d'adapter le dispositif de réception à différent type ou taille de moteur électrique 1. Autrement dit, le moyen intercalaire adapte les dimensions du dispositif de réception, en particulier les dimensions de la zone de réception du moteur, aux dimensions de ce moteur électrique 1. Cette zone de réception est délimitée par le premier moyen de blocage 30, la bague 18, le corps 14 de l'anneau 13 et le second moyen de blocage 22.

Dans le cas de la figure 5, il s'agit d'une partie constitutive de l'anneau 13 intercalée entre le moteur électrique 1 et la bague 18 de sorte à maintenir et solidariser un moteur de diamètre inférieur au diamètre intérieur de la bague 18 alors que la longueur de ce moteur est sensiblement équivalente à la longueur de la bague 18. Autrement dit, le moyen intercalaire intervient dans une situation où le moteur n'est pas en contact avec la bague quand ces pièces sont installées co-axialement.

A titre d'exemple, le moyen intercalaire 42 prend la forme d'au moins un bras 43 qui prend naissance sur le corps 14 de l'anneau 13. Alternativement, le bras 43 est issu du second moyen de blocage 22 et prend naissance sur la butée formée par ce dernier.

Le bras 43 s'étend parallèlement à l'axe longitudinal 2 du moteur 1 et vient s'interposer entre une face intérieure 44 de la bague 18 et un corps du moteur délimité par une paroi périphérique 45. Le bras 43 est alors en contact d'un côté avec la face intérieure 44 et de l'autre avec la paroi périphérique 45.

Dans un exemple de réalisation de l'invention, les bras 43 sont au nombre de trois. Ils forment ainsi une bague discontinue autour du moteur. De manière alternative, le moyen intercalaire prend la forme d'un tube circulaire formé tout autour du moteur 1.

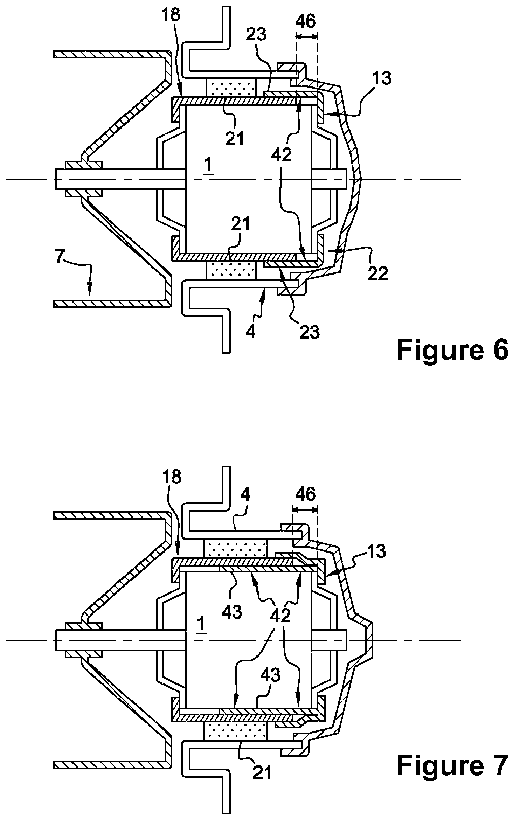

La figure 6 illustre le moyen intercalaire 42 dans une variante vouée à l'adaptation du dispositif de réception à un moteur électrique 1 dont le diamètre extérieur correspond au diamètre intérieur de la bague 18 mais dont la longueur est plus importante que la longueur de cette bague. Dans le cas d'espèce, le moyen intercalaire prend la forme d'une partie périphérique 46 adjacente au corps 14 de l'anneau 13. En pratique, cette partie périphérique correspond à un allongement du corps 14 situé entre le moyen de fixation 23 et le second moyen de blocage 22. Cette partie périphérique 46 couvre ainsi la partie du moteur 1 qui dépasse longitudinalement de la bague 18 en permettant au second moyen de blocage 22 de venir en appui sur le moteur 1 tout en garantissant que l'excroissance 24 vienne en prise sur la dent 17.

La figure 7 illustre une combinaison du moyen intercalaire de la figure 5 avec le moyen intercalaire de la figure 6. Il s'agit de garantir la fixation d'un moteur 1 qui présente à la fois un diamètre externe inférieur au diamètre intérieur de la bague 18 et une longueur supérieure à la longueur de cette même bague 18.

L'anneau 13 comprend la partie périphérique 46 et au moins un bras 43 de longueur adaptée pour s'intercaler entre le moteur 1 et la bague 18.

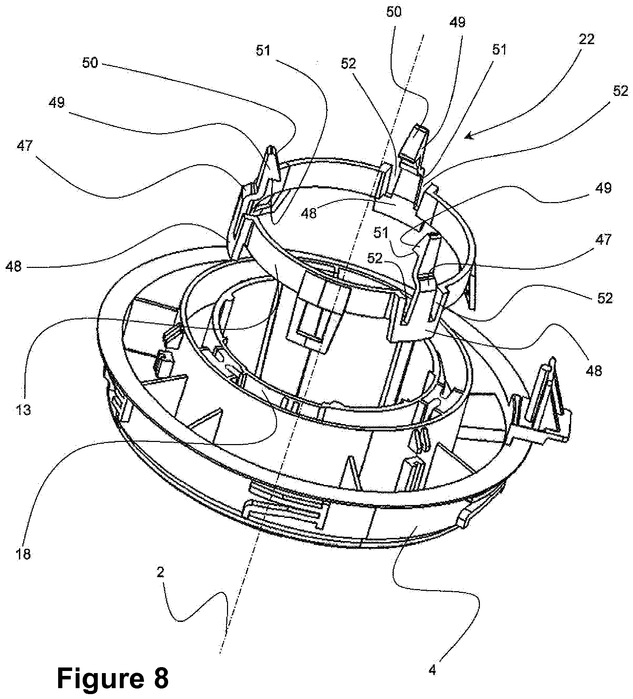

La figure 8 illustre un mode de réalisation de l'invention qui diffère des variantes précédentes en ce que le second moyen de blocage 22 de l'anneau 13 est flexible. Sur cette figure, l'anneau 13 est représenté avant son montage sur la bague 18.

Le second moyen de blocage 22 du moteur comprend trois doigts 47 répartis sur la périphérie de l'anneau 13 selon un secteur angulaire par exemple égal à 120°. Chacun de ces doigts 47 prend naissance sur l'anneau 13 au niveau d'un renfort 48 qui s'étend radialement par rapport à l'axe longitudinal 2. Ce renfort 48 déborde de l'anneau 13 vers l'extérieur de ce dernier et s'étend dans l'axe longitudinal 2 en direction du support moteur 4. Le décalage de ce renfort 48 par rapport à l'anneau 13 évite une interférence entre le renfort 48 et la bague 18 quand l'anneau 13 est assemblé sur la bague 18.

Le doigt 47 présente une extrémité à l'opposé du renfort 48, cette extrémité libre se terminant par un crochet 49. Ce dernier comporte une face inclinée 50 qui s'étend de l'extrémité libre du doigt 47 jusqu'à un bord de préemption 51 qui s'étend dans un plan perpendiculaire à l'axe longitudinale 2.

La face 50 de chaque doigt 47 est inclinée de tel sorte que le diamètre d'un cercle qui s'inscrit sur les extrémités libres des doigts 47 est plus grand que le diamètre d'un cercle qui s'inscrit sur l'arête formée à la jonction de la face inclinée 50 et du bord de préemption 51 de chaque doigt 47.

Ce doigt 47 est rendu flexible par rapport à l'anneau 13 au moyen de fentes 52 pratiquées dans le renfort 48 de part et d'autre du doigt 47 sur la hauteur correspondant à la hauteur de l'anneau. Ces fentes 52 s'étendent dans la direction de l'axe longitudinale 2.

La flexibilité de doigts 47 combinée à la face inclinée 50 de ce dernier permet d'introduite le moteur électrique après avoir assemblé l'anneau 13 sur la bague 8.

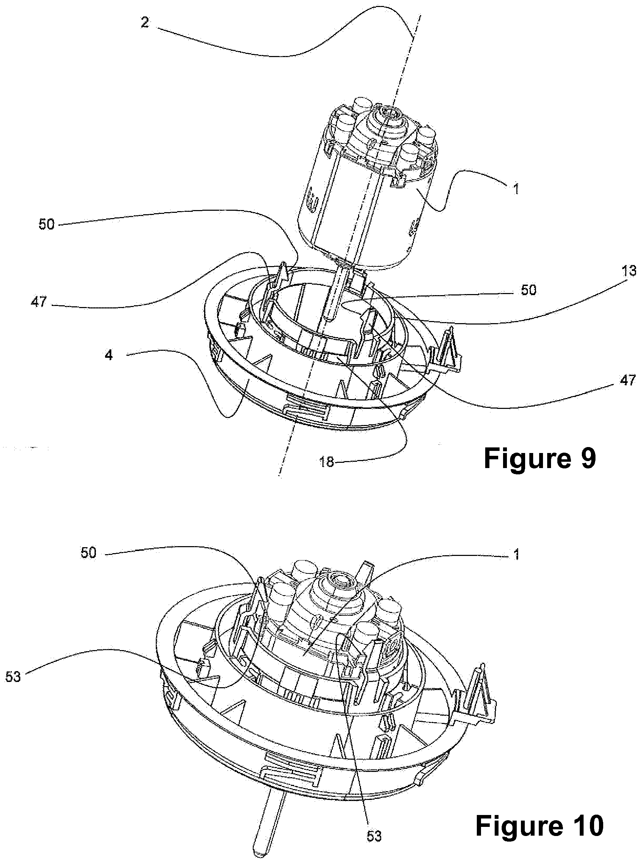

Ceci est mieux illustré aux figures 9 et 10. La figure 9 montre l'anneau 13 assemblé à la bague 18 du support moteur 4. Le moteur 1 est illustré prêt à être enfilé à l'intérieur du support moteur 4. Cette opération s'effectue par translation du moteur 1 dans la direction de l'axe longitudinal 2 en allant vers le support moteur 4. Quand le moteur 1 vient en contact de la face inclinée 50 des doigts 47, un effort radial par rapport à l'axe longitudinal 2 s'exerce sur ces derniers qui tend à les écarter.

La figure 10 montre le moteur électrique 1 une fois introduit à l'intérieur du support moteur 4, en position finale. Quand le moteur vient buter contre le premier moyen de blocage formé sur la bague 8, la flexibilité et la résilience des doigts 47 permet à ces derniers de reprendre leur position de telle sorte que le bord de préemption 51 vienne en prise sur une arête 53 constitutive du moteur électrique 1. Plus spécifiquement, cette arête est une tranche de la carcasse métallique qui entoure le moteur 1.

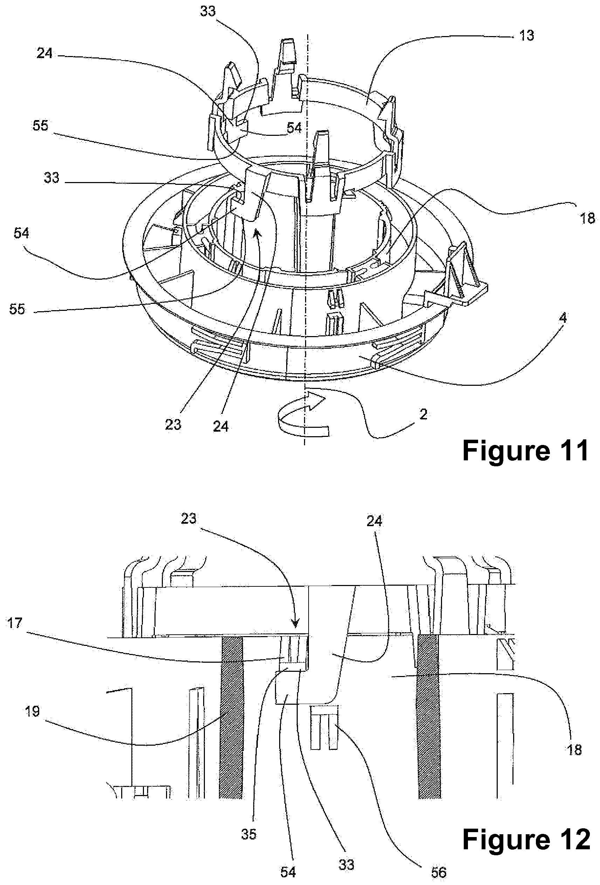

La figure 11 montre une variante de réalisation du moyen de fixation 23 qui relie l'anneau 13 à la bague 18. Ce moyen de fixation présente une forme générale en « L ». L'excroissance 24 s'étend dans une direction parallèle à l'axe longitudinal 2 en direction du support moteur 4. L'extrémité libre de cette excroissance 24 se termine par un plat 54 qui s'étend orthogonalement par rapport à l'axe longitudinale 2 et sur un secteur angulaire restreint (de 2° à 10°) autour de cet axe. Chaque plat 54 présente un premier bord 33 voué à venir en appui contre une dent 17 mais il comporte également un second bord 55 qui est opposé au premier bord 33 par rapport au plat 54.

La figure 12 montre en détails le moyen de fixation 23 en détail. Le premier bord 33 est en appui sur le bord d'attaque 35 de la dent 17 formée à la périphérie externe de la bague 8.

Un point de guidage 56 est formé sur la périphérie externe de la bague 18. Ce point de guidage 56 est issu de moulage avec la bague 18. Ce point de guidage 56 est décalé angulairement par rapport à la dent 17 et espacé de cette dernière d'une distance équivalente à la hauteur du plat 54. Le plat 54 est ainsi intercalé ou interposé entre la dent 17 et le point de guidage 56.

Ce point de guidage 56 a pour fonction de bloquer la translation de l'anneau 13 dans la direction longitudinale selon l'axe 2 de sorte à garantir que les bords de préemption 51 viennent prendre appui sur l'arête 53 du moteur 1 et ainsi garantir le blocage du moteur 1.

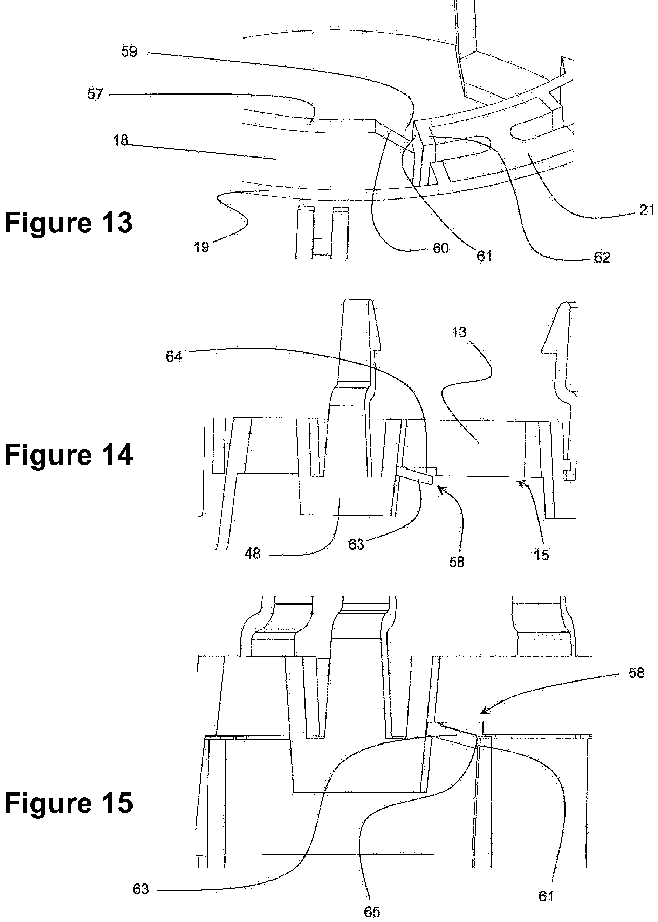

Les figures 13 à 15 montrent un exemple de réalisation d'un dispositif de blocage en rotation 58 de l'anneau 13 sur la bague 18 quand ces derniers sont assemblés selon le mode de fixation illustré aux figures 11 et 12. Ce dispositif a pour fonction de bloquer un sens de rotation autour de l'axe longitudinal 2 de l'anneau 13 par rapport à la bague 18.

La figure 13 montre une vue partielle de la bague 18, du moyen de découplage 21 et de la paroi intermédiaire 19. Une première partie du dispositif de blocage en rotation 58 est aussi illustré. La bague 18 présente une tranche 57 sur laquelle une encoche 59 est réalisée. Cette dernière fait partie du dispositif de blocage en rotation 58.

L'encoche 59 est délimitée par un pan incliné 60 et une butée 61, cette dernière étant formée par la bague 18 et plus particulièrement par un logement 62 qui fait partie de la bague 18 et qui reçoit le moyen de découplage 21.

La figure 14 illustre une seconde partie du dispositif de blocage en rotation 58. L'anneau 13 comprend une languette flexible 63 formée au niveau de la première extrémité ouverte 15 tournée vers la bague 18. Cette languette 63 prend naissance au niveau du renfort 48 et s'étend dans un plan incliné par rapport au plan général de l'anneau 13. L'anneau 13 comprend également une découpe 64 de forme complémentaire à la forme de la languette flexible 63 de sorte à recevoir cette dernière en phase d'assemblage de l'anneau 13 sur la bague 18.

La figure 15 illustre la coopération de la languette flexible 63 de l'anneau 13 avec l'encoche 59 pratiquée sur la tranche de la bague 18. Un bout 65 formé par l'extrémité libre de la languette 63 est en appui sur la butée 61 de l'encoche 59. On garantit ainsi que la rotation dans le sens anti-horaire est interdite par le dispositif de blocage en rotation 58. La rotation selon le sens horaire est quant à elle empêchée par une mise en appui du côté de l'excroissance 24 sur un côté de la dent 17 (figure 12).

Le procédé d'assemblage du moteur 1 dans le support moteur 4 en rapport avec la variante des figures 11 à 15 va maintenant être décrit.

L'anneau 13 est tout d'abord approché de la bague 18 par translation de ce dernier selon une direction parallèle à l'axe longitudinale 2. Quand le plat 54 vient en appui sur le point de guidage 56, une rotation de l'anneau 13 dans le sens horaire autour de l'axe longitudinal 2 est opérée. Cette rotation a pour effet d'amener en prise le plat 54 contre la dent 17 du moyen de fixation 23. Pendant cette phase de translation, le dispositif de blocage en rotation 58 est mis en œuvre. En effet, la languette flexible 63 se déforme dans une direction parallèle à l'axe longitudinal 2 et vient se loger dans la découpe 64 sous l'effort appliqué par l'anneau 13 contre la bague 8. Quand l'excroissance 24 bute contre la dent 17, la languette flexible 63 reprend sa forme initiale et inclinée de sorte à prendre place dans l'encoche 59. Le bout 65 vient alors en appui contre la butée 61 et bloque ainsi la rotation de l'anneau 13 par rapport à la bague 8.

A ce stade de l'assemblage, le moteur 1 est introduit dans l'anneau 13 puis dans la bague 8 par une translation selon l'axe longitudinal 2.

La variante des figures 8 à 10 illustrant le moyen de blocage 22 dans une forme flexible est bien entendu applicable au moyen de fixation 23 illustré aux figures 1 à 7 ainsi qu'au moyen de fixation illustrée aux figures 11 à 15.

De même, le moyen intercalaire 42 illustré aux figures 5 à 7 est applicable à la variante de l'invention illustrée aux figures 11 à 15.

Le dispositif de réception selon l'invention, en séparant la bague de maintien du moteur en deux, donne ainsi la possibilité de standardiser le support moteur 4 et la bague 18 équipée de son moyen de découplage 21 et de reporter les spécificités relatives au moteur sur l'anneau 13.

## Revendications

1. Dispositif de réception d'un moteur électrique (1) s'étendant selon un axe longitudinal (2) comprenant un support moteur (4) apte à loger le moteur électrique (1), et comportant une paroi intermédiaire (19), une bague (18) et au moins un moyen de découplage (21) reliant la paroi intermédiaire (19) et la bague (18), la bague (18) comprenant au moins un premier moyen de blocage (30) du moteur électrique (1),
le dispositif de réception comprenant un anneau (13) distinct de la bague (18) et comprenant au moins un second moyen de blocage (22) du moteur électrique (1), la bague (18) et l'anneau (13) étant assemblés l'un à l'autre par au moins un moyen de fixation (23),
dans lequel l'anneau (13) comprend un moyen intercalaire (42) adaptant des dimensions du dispositif de réception aux dimensions dudit moteur (1), **caractérisé en ce que** le moyen intercalaire (42) prend la forme d'au moins un bras (43) qui débouche de l'anneau (13) et qui est apte à s'intercaler entre ledit moteur (1) et ladite bague (18).

2. Dispositif selon la revendication 1, dans lequel le premier moyen de blocage (30) est apte à limiter le mouvement du moteur (1) selon l'axe longitudinal (2).

3. Dispositif selon la revendication 2, dans lequel la bague (18) est apte à entourer le moteur (1) et de laquelle débouche le premier moyen de blocage (30), ce dernier prenant la forme d'une butée qui s'étend radialement par rapport à l'axe 2.

4. Dispositif selon l'une quelconque des revendications 1 à 3, dans lequel le second moyen de blocage (22) est apte à limiter le mouvement du moteur (1) selon l'axe longitudinal (2).

5. Dispositif selon la revendication 4, dans lequel le second moyen de blocage (22) prend la forme d'au moins un doigt flexible (47).

6. Dispositif selon la revendication 2, dans lequel l'anneau (13) comprend un corps (14) apte à entourer le moteur (1) et duquel débouche le second moyen de blocage (22), ce dernier prenant la forme d'une butée qui s'étend de manière angulaire par rapport audit corps (14).

7. Dispositif selon l'une quelconque des revendications précédentes, **caractérisé en ce que** le premier moyen de blocage (30) est apte à retenir ledit moteur (1) dans un premier sens selon l'axe longitudinal (2) alors que le second moyen de blocage (22) est apte à limiter le mouvement du moteur (1) dans un second sens opposé audit premier sens.

8. Dispositif selon la revendication 6, dans lequel le moyen de fixation (23) prend la forme d'une excroissance (24) qui s'étend du corps (14) selon l'axe longitudinal (2) et qui comprend un compartiment de réception (25) d'une dent (17) issue de la bague (18).

9. Dispositif selon la revendication 6, dans lequel le moyen de fixation (23) prend la forme d'une excroissance (24) qui s'étend du corps (14) selon l'axe longitudinal (2), ladite excroissance (24) se terminant par plat (54) qui prend appui contre une dent (17) issue de la bague (18).

10. Dispositif selon la revendication 9, dans lequel le plat (54) est interposé entre la dent (17) et un point de guidage (56) issu de la bague (8).

11. Dispositif selon l'une quelconque des revendications 9 ou 10, dans lequel est prévu un dispositif de blocage en rotation (58) pour empêcher la rotation de l'anneau (13) par rapport à la bague (18).

12. Dispositif selon la revendication 11, dans lequel le dispositif de blocage en rotation (58) est formé par une languette flexible (63) issue de l'anneau (13) qui coopère avec une encoche (59) pratiquée dans la bague (18).

13. Dispositif selon l'une des revendications précédentes, dans lequel le moyen intercalaire (42) est une partie périphérique (46) de l'anneau (13) située entre le moyen de fixation (23) et le second moyen de blocage (22).

14. Groupe moto-ventilateur d'une installation de ventilation d'un véhicule automobile comprenant un moteur électrique (1) qui actionne une roue de pulseur (7) et un support (4) du moteur électrique (1) apte à être fixé sur ladite installation, **caractérisé en ce qu'**il comprend un dispositif de réception selon l'une quelconque des revendications précédentes.

15. Groupe moto-ventilateur selon la revendication 14, dans lequel ladite bague (18) est relié audit support moteur (4) par au moins un moyen de découplage (21).

16. Groupe moto-ventilateur selon la revendication 15, dans lequel le moyen de découplage (21) est un plot parallélépipédique comprenant un premier côté (37) en contact direct avec la paroi intermédiaire (19), un deuxième côté (36) en contact direct avec la bague (18) et un troisième côté libre (38) s'étendant dans la direction de l'axe longitudinal (2) du moteur (1), le troisième côté (36) présentant au moins un évidement (39) s'étendant selon une direction parallèle à l'axe longitudinal (2).

## Patentansprüche

1. Vorrichtung zur Aufnahme eines sich entlang einer Längsachse (2) erstreckenden Elektromotors (1), welche einen Motorträger (4) umfasst, der geeignet ist, den Elektromotor (1) aufzunehmen, und eine Zwischenwand (19), eine Hülse (18) und wenigstens ein Entkopplungsmittel (21), das die Zwischenwand (19) und die Hülse (18) verbindet, aufweist, wobei die Hülse (18) wenigstens ein erstes Mittel zur Arretierung (30) des Elektromotors (1) umfasst, wobei die Vorrichtung zur Aufnahme einen Ring (13) umfasst, der von der Hülse (18) verschieden ist und wenigstens ein zweites Mittel zur Arretierung (22) des Elektromotors (1) umfasst, wobei die Hülse (18) und der Ring (13) durch wenigstens ein Befestigungsmittel (23) zusammengebaut sind,
wobei der Ring (13) ein Einlagemittel (42) umfasst, das Abmessungen der Vorrichtung zur Aufnahme an die Abmessungen des Motors (1) anpasst,
**dadurch gekennzeichnet, dass** das Einlagemittel (42) die Form wenigstens eines Armes (43) annimmt, welcher sich aus dem Ring (13) hinaus erstreckt und welcher geeignet ist, sich zwischen dem Motor (1) und der Hülse (18) einzufügen.

2. Vorrichtung nach Anspruch 1, wobei das erste Arretiermittel (30) geeignet ist, die Bewegung des Motors (1) entlang der Längsachse (2) zu begrenzen.

3. Vorrichtung nach Anspruch 2, wobei die Hülse (18) geeignet ist, den Motor (1) zu umgeben, und sich aus ihr heraus das erste Arretiermittel (30) erstreckt, wobei dieses Letztere die Form eines Anschlags annimmt, welcher sich radial in Bezug auf die Achse (2) erstreckt.

4. Vorrichtung nach einem der Ansprüche 1 bis 3, wobei das zweite Arretiermittel (22) geeignet ist, die Bewegung des Motors (1) entlang der Längsachse (2) zu begrenzen.

5. Vorrichtung nach Anspruch 4, wobei das zweite Arretiermittel (22) die Form wenigstens eines flexiblen Fingers (47) annimmt.

6. Vorrichtung nach Anspruch 2, wobei der Ring (13) einen Körper (14) umfasst, der geeignet ist, den Motor (1) zu umgeben, und aus dem heraus sich das zweite Arretiermittel (22) erstreckt, wobei dieses Letztere die Form eines Anschlags annimmt, welcher sich in Bezug auf den Körper (14) unter einem Winkel erstreckt.

7. Vorrichtung nach einem der vorhergehenden Ansprüche, **dadurch gekennzeichnet, dass** das erste Arretiermittel (30) geeignet ist, den Motor (1) in einer ersten Richtung entlang der Längsachse (2) zu halten, während das zweite Arretiermittel (22) geeignet ist, die Bewegung des Motors (1) in einer zweiten Richtung zu begrenzen, die zur ersten Richtung entgegengesetzt ist.

8. Vorrichtung nach Anspruch 6, wobei das Befestigungsmittel (23) die Form eines Vorsprungs (24) annimmt, welcher sich von dem Körper (14) aus entlang der Längsachse (2) erstreckt und welcher einen Raum zur Aufnahme (25) eines Zahns (17) umfasst, der an die Hülse (18) angeformt ist.

9. Vorrichtung nach Anspruch 6, wobei das Befestigungsmittel (23) die Form eines Vorsprungs (24) annimmt, welcher sich von dem Körper (14) aus entlang der Längsachse (2) erstreckt, wobei der Vorsprung (24) in einem flachen Abschnitt (54) endet, welcher an einem Zahn (17) zur Anlage kommt, der an die Hülse (18) angeformt ist.

10. Vorrichtung nach Anspruch 9, wobei der flache Abschnitt (54) zwischen dem Zahn (17) und einem an die Hülse (8) angeformten Führungspunkt (56) angeordnet ist.

11. Vorrichtung nach einem der Ansprüche 9 oder 10, wobei eine Vorrichtung zur Sicherung gegen Verdrehen (58) vorgesehen ist, um die Drehung des Ringes (13) in Bezug auf die Hülse (18) zu verhindern.

12. Vorrichtung nach Anspruch 11, wobei die Vorrichtung zur Sicherung gegen Verdrehen (58) von einer an den Ring (13) angeformten flexiblen Zunge (63) gebildet wird, welche mit einem Einschnitt (59) zusammenwirkt, der in der Hülse (18) ausgebildet ist.

13. Vorrichtung nach einem der vorhergehenden Ansprüche, wobei das Einlagemittel (42) ein peripherer Teil (46) des Ringes (13) ist, der sich zwischen dem Befestigungsmittel (23) und dem zweiten Arretiermittel (22) befindet.

14. Gebläseeinheit einer Belüftungsanlage eines Kraftfahrzeugs, welche einen Elektromotor (1), der ein Gebläserad (7) antreibt, und einen Träger (4) des Elektromotors (1), der an der Anlage befestigbar ist, umfasst, **dadurch gekennzeichnet, dass** sie eine Vorrichtung zur Aufnahme nach einem der vorhergehenden Ansprüche umfasst.

15. Gebläseeinheit nach Anspruch 14, wobei die Hülse (18) mit dem Motorträger (4) durch wenigstens ein Entkopplungsmittel (21) verbunden ist.

16. Gebläseeinheit nach Anspruch 15, wobei das Entkopplungsmittel (21) ein quaderförmiges Klötzchen ist, das eine erste Seite (37), die sich in direktem Kontakt mit der Zwischenwand (19) befindet, eine zweite Seite (36), die sich in direktem Kontakt mit der Hülse (18) befindet, und eine freie dritte Seite (38), die sich in der Richtung der Längsachse (2) des Motors (1) erstreckt, umfasst, wobei die dritte Seite (36) wenigstens eine Aussparung (39) aufweist, die sich in einer zur Längsachse (2) parallelen Richtung erstreckt.

## Claims

1. Device for receiving an electric motor (1) which extends along a longitudinal axis (2) comprising a motor support (4) capable of housing the electric motor (1), and comprising an intermediate wall (19), a collar (18) and at least one decoupling means (21) connecting the intermediate wall (19) and the collar (18), the collar (18) comprising at least one first means (30) for immobilizing the electric motor (1), the receiving device comprising a ring (13) distinct from the collar (18) and comprising at least one second means (22)for immobilizing the electric motor (1), the collar (18) and the ring (13) being connected to one another by at least one fastening means (23),
wherein the ring (13) comprises an insert means (42) adapting dimensions of the receiving device to the dimensions of said motor (1)
**characterized in that** the insert means (42) takes the form of at least one arm (43) which emerges from the ring (13) and which is capable of being inserted between said motor (1) and said collar (18).

2. Device according to Claim 1, wherein the first immobilizing means (30) is capable of limiting the movement of the motor (1) along the longitudinal axis (2).

3. Device according to Claim 2, wherein the collar (18) is capable of surrounding the motor (1) and from which emerges the first immobilizing means (30), the latter taking the form of an abutment which extends radially relative to the axis (2).

4. Device according to any one of Claims 1 to 3, wherein the second immobilizing means (22) is capable of limiting the movement of the motor (1) along the longitudinal axis (2).

5. Device according to Claim 4, wherein the second immobilizing means (22) takes the form of at least one flexible finger (47).

6. Device according to Claim 2, wherein the ring (13) comprises a body (14) capable of surrounding the motor (1) and from which emerges the second immobilizing means (22), the latter taking the form of an abutment which extends at an angle relative to said body (14).

7. Device according to any one of the preceding claims, **characterized in that** the first immobilizing means (30) is capable of retaining said motor (1) in a first direction along the longitudinal axis (2) while the second immobilizing means (22) is capable of limiting the movement of the motor (1) in a second direction opposite to said first direction.

8. Device according to Claim 6, wherein the fastening means (23) takes the form of an excrescence (24) which extends from the body (14) along the longitudinal axis (2) and which comprises a compartment (25) for receiving a tooth (17) originating from the collar (18).

9. Device according to Claim 6, wherein the fastening means (23) takes the form of an excrescence (24) which extends from the body (14) along the longitudinal axis (2), said excrescence (24) terminating in a flat (54) which rests against a tooth (17) originating from the collar (18).

10. Device according to Claim 9, wherein the flat (54) is interposed between the tooth (17) and a guidance point (56) originating from the collar (8).

11. Device according to either one of Claims 9 and 10, wherein a rotary immobilizing device (58) is provided to prevent the rotation of the ring (13) relative to the collar (18).

12. Device according to Claim 11, wherein the rotary immobilizing device (58) is formed by a flexible tongue (63) originating from the ring (13) which interacts with a notch (59) made in the collar (18).

13. Device according to any one of the preceding claims, wherein the insert means (42) is a peripheral portion (46) of the ring (13) situated between the fastening means (23) and the second immobilizing means (22).

14. Motor-fan unit of a ventilation installation of a motor vehicle comprising an electric motor (1) which actuates a blower rotor (7) and a support (4) of the electric motor (1) capable of being fastened to said installation, **characterized in that** it comprises a receiving device according to any one of the preceding claims.

15. Motor-fan unit according to Claim 14, wherein said collar (18) is connected to said motor support (4) by at least one decoupling means (21).

16. Motor-fan unit according to Claim 15, wherein the decoupling means (21) is a parallelepipedal block comprising a first side (37) in direct contact with the intermediate wall (19), a second side (36) in direct contact with the collar (18) and a third side (38) which is free and extends in the direction of the longitudinal axis (2) of the motor (1), the third side (36) having at least one cutout (39) extending in a direction parallel to the longitudinal axis (2).
